# EUROPÄISCHE PATENTSCHRIFT

(11) **EP 3 213 824 B1**
(45) Veröffentlichungstag und Bekanntmachung des Hinweises auf die Patenterteilung: **27.06.2018**
(21) Anmeldenummer: 16158476.8
(22) Anmeldetag: 03.03.2016
(51) Int. Cl.: B05C 1/00, B05C 11/10, B05C 1/08, B27D 5/00, B27G 11/02

(54) **VORRICHTUNG UND VERFAHREN ZUM AUFTRAGEN VON KLEBSTOFF AUF EIN SUBSTRAT**
DEVICE AND METHOD FOR APPLYING AN ADHESIVE TO A SUBSTRATE
DISPOSITIF ET PROCEDE D'APPLICATION DE COLLE SUR UN SUBSTRAT

(43) Veröffentlichungstag der Anmeldung: 06.09.2017
(73) Patentinhaber: Robatech AG, 5630 Muri (CH)
(72) Erfinder: Kappeler, Roman, 5630 Muri (CH)
(74) Vertreter: Quermann, Helmut

(56) Entgegenhaltungen:
- EP-A1- 1 798 013
- DE-T5-112008 003 942
- DE-U1-202014 009 945
- US-A1- 2012 240 846

## Beschreibung

Die Erfindung betrifft eine Vorrichtung zum Auftragen von Klebstoff auf ein Substrat, mit einer um eine Achse drehbaren Auftragswalze, einer Einrichtung zum Ausgeben von Klebstoff auf eine Umfangsfläche der Auftragswalze, einem Abgabebereich der Auftragswalze zum Abgeben von Klebstoff von der Auftragswalze, und mit einer Abstreifrakel, wobei der Abgabebereich für Klebstoff in Drehrichtung der Auftragswalze hinter der Einrichtung zum Ausgeben des Klebstoffs auf die Auftragswalze und vor der Abstreifrakel angeordnet ist.

Die Erfindung betrifft ferner ein Verfahren zum Auftragen von Klebstoff auf ein Substrat.

### Technisches Gebiet

Platten, insbesondere solche aus Holz oder holzhaltigem Material, werden heute in den verschiedensten Anwendungen eingesetzt. Damit die Platten schön aussehen und an die Anforderungen der Verwendung anpassbar sind, werden sie oft an den schmalen Kanten mit einem flexiblen Kantenband und an den großen Flächen mit flexiblen Deckplatten oder -bändern überklebt. Beispielsweise werden Möbel für die Küche oder das Bad sehr häufig aus derartigen Platten gefertigt.

Unter Substrat werden insbesondere solche flachen Gegenstände wie die genannten Platten aus Holz oder holzhaltigem Material, ferner Hohlkammerplatten, manchmal auch Werkstück genannt, verstanden. Das Bekleben von den exponierten Kanten eines flachen Gegenstandes, insbesondere eines solchen aus Holz oder holzhaltigem Material, mit einem Kantenband, um ein ästhetisches Aussehen zu erzeugen und dauerhaft ist, wird üblicherweise als "Edge banding" bezeichnet. In der Regel sind die exponierten Kanten die Schmalseiten des Produkts.

Für die Herstellung derartiger Substrate bzw. Platten sind Kantenleimmaschinen verfügbar. Es gibt Maschinen, die in der Lage sind, die große Fläche der Platten mit Deckplatten oder Deckbändern zu versehen, und es gibt Maschinen, die dafür vorgesehen sind, die schmalen Kanten mit dem Kantenband zu versehen. Es sind auch Maschinen bekannt, die beide Prozesse ausführen können.

### Stand der Technik

Aus der DE 202 03 827 U1 ist ein Leimbecken für Kantenleimmaschinen mit einem Leimkopf bekannt. Der Leimkopf weist einen Innenraum auf, der an der Oberseite des Leimkopfs in einer Einlauföffnung endet, durch die flüssiger Klebstoff eingefördert werden kann. Der Innenraum ist verbunden mit einem Austrittsschlitz, an den ein drehbarer Dosierstab angrenzt, dessen Drehachse vertikal verläuft. Dem Dosierstab grenzt nach außen eine Auftragswalze an, deren Drehachse ebenfalls vertikal verläuft. Die Auftragswalze ist an einem oberhalb des Leimkopfs befestigten Lagerbock drehbar gelagert und ist mit einem Drehmotor verbunden. Mit dem Drehmotor kann die Auftragswalze im Gleichlauf mit der Bewegungsrichtung eines Werkstücks oder im Gegenlauf zu dieser gedreht werden. Durch Drehen des Dosierstabs kann ein Spalt erzeugt werden, durch den Klebstoff aus dem Innenraum des Leimkopfs an die drehende Auftragswalze gelangen kann und sich dabei auf die Walze überträgt. Der Klebstoffauftrag auf der Auftragswalze hat dabei eine konstante Länge in Achsrichtung der Walze, die einer Ausnehmung am Dosierstab entspricht. Die Klebstoffschichtdicke auf der Auftragswalze kann durch Verdrehen des Dosierstabs eingestellt werden. Die zu verarbeitenden Werkstücke werden nun mit der Kante an der mit Klebstoff versehenen drehenden Auftragswalze vorbeitransportiert und übernehmen dabei den Klebstoff. Die Werkstücke werden immer in der gleichen Transportrichtung an der Auftragswalze vorbeigeführt.

Mit dem beschriebenen Leimkopf und dem zugehörigen Vorratsbehälter ist das System dazu geeignet, verschiedene Klebstoffe (PUR, EVA, PA, PO etc.) zu verarbeiten. Eine Umstellung des Klebstoffes auf einen anderen kann dabei mit relativ kleinem Aufwand geschehen. Klebestoffe, wie Polyurethan, welcher mit dem Wasser aus der Umgebungsluft einen Vernetzungsprozess eingehen, sind im beschriebenen System jedoch nur mit erhöhtem Aufwand betreibbar. Ein großer Anteil der Klebstoffschicht auf der Auftragswalze wird dauernd der Umgebungsluft ausgesetzt. Durch das Werkstück wird von der Auftragswalze nur Klebstoff in der Dicke des Werkstücks abgenommen. Ferner werden die Werkstücke mit Lücken zwischen einander an der Auftragswalze vorbeitransportiert. Der Klebstoff auf der Walze, der nicht abgetragen wird, gelangt wieder zurück in den Austrittsschlitz und wird erneut vom Dosierstab auf die Walze übertragen. Werden Werkstücke mit geringer Dicke verarbeitet, wird wenig Klebstoff verbraucht und der sich umwälzende Klebstoff beginnt zu vernetzen. Das führt zu einer Verringerung der Klebstoffqualität und damit zu einer geringeren Haftfähigkeit des Klebstoffs. Es besteht auch die Gefahr, dass der Dosierstab den Klebstoff nicht mehr sauber auf die Auftragswalze und damit auf das Werkstück übertragen kann, weil teilvernetzte Klebstoffteile nicht mehr gleichmäßig dosiert werden können.

Ein weiterer Nachteil des beschriebenen Leimkopfs liegt darin, dass der Klebstoff, der über die Auftragswalze und den Dosierstab ausgefördert wird, mit dem Staub in der Umgebung in Kontakt kommt. Holzbearbeitungsmaschinen sind trotz Absaugungen immer Staub in der Umgebung ausgesetzt. Der wieder zurück in den Austrittsschlitz zurückgeführte Klebstoff vermischt sich mit dem neuen Klebstoff. Dadurch verringert sich die Klebstoffqualität und damit die Haftfähigkeit des Klebstoffs. Dieser Nachteil besteht bei allen Klebstoffen, die verarbeitet werden.

Neben dem beschriebenen System sind auch Systeme bekannt, bei denen der Klebstoff von unten oder von oben in einen Innenraum direkt von einem Vorschmelzgerät über einen Schlauch zuführt wird. Meistens ist dann der Innenraum größer ausgeführt, sodass dieser als Klebstoffspeicher eingesetzt werden kann.

Alle derzeit bekannten Systeme zur Beleimung der Kanten eines Substrats haben den Nachteil, dass der Klebstoffauftrag an der Vorderkante und an der Hinterkante so aufgetragen wird, dass er leicht über die Kanten vorsteht. Da der Klebstofffilm auf der Auftragswalze am ganzen Walzenumfang aufgetragen ist, entsteht eine Überhäufung von Klebstoff beim Einlauf des Substrats in die Auftragswalze. Beim Auslauf wird Klebstoff nachgezogen. Dieser Nachteil ist dann von Bedeutung, wenn beispielsweise bei einem rechteckigen Produkt die beiden Kanten des Substrats, welche zur Kante, die mit Klebstoff versehen werden, im rechten Winkel stehen, bereits mit dem Kantenband versehen sind. Der zuviel aufgetragene Klebstoff wird dabei an diesen Kantenbändern sichtbar und muss durch einen weiteren Arbeitsschritt abgetragen werden.

Eine Vorrichtung der eingangs genannten Art ist aus der DE 29 39 102 A1 bekannt. Mittels dieser Vorrichtung und dem in diesem Zusammenhang beschriebenen Verfahren kann Klebstoff durch eine Klebstoffförderpumpe einem stromabwärts angeordneten, schaltbaren Ventil und von dort durch eine Leitung einer Schlitzdüse zugeführt werden. Der Klebstoff wird von der Schlitzdüse auf eine Auftragswalze und von der drehenden Auftragswalze auf ein bewegtes Substrat übertragen. Zur Vorrichtung gehören weiter eine Abstreifrakel und ein Auffangbecken zum Aufnehmen des überschüssigen Klebstoffs. Das Auffangbecken kann mittels einer Verbindung laufend mit frischem Klebstoff versorgt werden. Der Klebstoff wird von der Klebstoffförderpumpe aus dem Auffangbecken angesaugt. Die Abstreifrakel streift den überschüssigen Klebstoff von der Auftragswalze ab, bevor diese wieder mit neuem Klebstoff von der Schlitzdüse, die parallel zur Auftragswalzenachse steht, beschickt wird. Die Abstreifrakel ist, betrachtet in Drehrichtung der Auftragswalze, nachfolgend der Stelle, an der die Auftragswalze Klebstoff auf das Substrat überträgt, angeordnet.

Optional kann eine Egalisierrakel, die zur Vergleichmäßigung und periodischem Takten des Klebstofffilms auf der Auftragswalze vorgesehen ist, zwischen der Schlitzdüse und der Klebstoffabgabestelle auf das Substrat angeordnet sein.

Durch eine Steuerung wird das schaltbare Ventil in der Leitung geschaltet. Alternativ oder ergänzend zur Egalisierrakel kann die periodische Taktung des Klebstofffilms durch Schalten des Ventils erfolgen. Die Klebstoffmenge, die von der Schlitzdüse auf die Auftragswalze übertragen wird, kann durch Verändern der Drehzahl der Klebstoffförderpumpe angepasst werden. Je nach Geschwindigkeit des Substrats, der gewünschten Klebstoffschichtdicke auf dem Substrat, oder der Auftragsbreite des Klebstoffs auf die Auftragswalze, ist eine andere Klebstofffördermenge erforderlich.

Die Vorrichtung eignet sich für Substrate, bei denen die Seite, die mit Klebstoff beschichtet wird, horizontal ausgerichtet ist. Durch den Gleichlauf vom Walzenumfang der Auftragswalze mit dem Substrat, kann nur etwa die Hälfte des Klebstofffilms von der Auftragswalze auf das Substrat übertragen werden. Dies bedeutet, dass ein nicht unerheblicher Teil an Klebstoff wieder in das Auffangbecken zurückgeführt werden muss. Die Drehachse der Walze ist dabei horizontal ausgerichtet.

Dadurch, dass der überschüssige Klebstoff wieder in den Kreislauf zurückgeführt wird, entstehen die gleichen bereits vorstehend in der DE 202 03 827 U1 zum PUR und zum Staub in der Umgebung beschriebenen Nachteile.

Ein weiterer Nachteil der heute eingesetzten Leim-Applikatoren besteht darin, dass der Klebstoff in einem sogenannten offenen System gefahren wird. Der Klebstoff verweilt in einem gegen die Umgebung offenen Klebstoffspeicher, Wanne oder Innenraum des Leimkopfes. Dadurch werden Dämpfe freigesetzt, die unangenehme Gerüche verbreiten und insbesondere bei PUR sogar gesundheitsgefährdende Wirkung haben können.

Aus der DE 20 2014 009 945 U1 ist eine Vorrichtung zum Auftragen von Klebstoff bekannt, die die Merkmale des Oberbegriffs des Patentanspruchs 1 aufweist. Diese weist zusätzlich zu den Merkmalen der Vorrichtung der eingangs genannten Art die Merkmale auf, dass die Auftragswalze um eine vertikale Achse drehbar ist und der von der Abstreifrakel abgestriffene überschüssige Klebstoff von der Abstreifrakel in eine unterhalb der Abstreifrakel angeordnete Auffangeinrichtung gelangt.

Ferner ist aus der US2012/0240846 A1 eine Kantenleimmaschine bekannt, wobei diese eine Einrichtung zum Ausgeben von Klebstoff auf eine Umfangsfläche einer Auftragswalze und einen Abgabebereich der Auftragswalze zum Abgeben von Klebstoff von der Auftragswalze auf ein Substrat aufweist. Ferner weist die Vorrichtung eine Egalisierrakel zur Anpassung der Schichtdicke des Klebstoffs auf der Auftragswalze auf, wobei diese Egalisierrakel in Drehrichtung der Auftragswalze nach der Einrichtung zum Ausgeben des Klebstoffs auf die Auftragswalze und vor dem Abgabebereich angeordnet ist.

### Erfindung

Aufgabe der Erfindung ist es, eine Vorrichtung und ein Verfahren zum Auftragen von Klebstoff auf ein Substrat zu schaffen, wobei es möglich sein soll, verschiedene Klebstoffarten, ohne die bekannten Nachteile des Stands der Technik in Kauf nehmen zu müssen, zu verarbeiten. Insbesondere soll es möglich sein, einen Klebstofffilm auf die Kanten, insbesondere schmale Kanten eines Substrats aufzubringen. Insbesondere soll eine Anwendung bei Kantenleimmaschinen möglich sein, die dazu geeignet sind, ein Kantenband zuzuführen.

Gelöst wird die Aufgabe durch eine Vorrichtung, die gemäß den Merkmalen des Patentanspruchs 1 ausgebildet ist.

Bei dieser erfindungsgemäßen Vorrichtung ist die Auftragswalze um eine vertikale Achse drehbar und es gelangt der von der Abstreifrakel abgestriffene überschüssige Klebstoff von der Abstreifrakel in eine unterhalb der Abstreifrakel angeordnete Auffangeinrichtung. Dieser abgestreifte Klebstoff wird somit nicht mehr in den Klebstoffapplikator, somit zur Einrichtung zum Ausgeben von Klebstoff auf die Umfangsfläche der Auftragswalze zurückgeführt.

Ein besonderer Vorteil der erfindungsgemäßen Vorrichtung ist darin zu sehen, dass der Klebstoff nur kurzzeitig mit der Umgebungsluft in Berührung kommt. Dies reduziert die Verschmutzung des Klebstoffs durch Staub aus der Umgebung und es entstehen weniger Dämpfe, die an die Umgebungsluft abgegeben werden. Die Einrichtung zum Ausgeben von Klebstoff auf die Umfangsfläche der Auftragswalze wird unter diesem Aspekt vorzugsweise so positioniert, dass die Auftragswalze den Klebstoff nur über einen kurzen Umfangteil transportieren muss. Hierbei handelt es sich vorzugsweise um ca. ein Viertel des Umfangs der Auftragswalze.

Mittels der Art des Klebstoffauftrags, von der Einrichtung zum Ausgeben von Klebstoff auf die Umfangsfläche der Auftragswalze und von der Auftragswalze auf das Substrat, lässt sich auch ein Klebstoffauftrag realisieren, der am Substrat nicht durchgehend ist. Bei entsprechender Gestaltung der Einrichtung zum Ausgeben des Klebstoffs können beliebige Auftragsmuster mit Klebstoffunterbrechungen realisiert werden.

Bei der erfindungsgemäßen Vorrichtung ist ferner von Vorteil, dass der von der Abstreifrakel abgestreifte Klebstoff dann, wenn genügend Klebstoff an der Abstreifrakel aufgebaut ist, von der Auffangvorrichtung aufgefangen wird. Dieser abgestreifte Klebstoff gelangt in die unterhalb der Abstreifrakel angeordnete Auffangeinrichtung. Diese Auffangeinrichtung kann beliebig gestaltet sein, sie dient dem Auffangen des Klebstoffs, um diesen zu sammeln, beispielsweise in einer Wanne oder aber um diesen abfördern zu können, beispielsweise mittels einer Förderpumpe.

Die Auftragswalze ist insbesondere als Zylinder ausgebildet. Dieser Zylinder kann durchaus ein Hohlzylinder sein. Bevorzugt ist eine Beheizung der Auftragswalze vorgesehen.

Gemäß einer bevorzugten Weiterbildung der Erfindung ist ferner vorgesehen, dass die Auftragswalze antreibbar ist. Insbesondere lässt sich die Auftragswalze mit unterschiedlichen Winkelgeschwindigkeiten antreiben.

Die Einrichtung zum Ausgeben von Klebstoff ist als Düse ausgebildet, wobei es sich bei dieser Düse um eine Schlitzdüse handelt. Diese Schlitzdüse ist in Schlitzerstreckung veränderlich. Vorzugsweise ist die Schlitzdüse auch bezüglich der Anordnung des Schlitzes zur Auftragswalze veränderlich. Insbesondere lässt sich der Abstand des Schlitzes zur Auftragswalze einstellen. Die Erstreckung des Schlitzes ist vertikal Insbesondere ist vorgesehen, dass das untere Ende des Schlitzes nicht veränderbar ist und der obere Bereich zwecks Einstellung der Schlitzlänge veränderlich ist. Diese Weiterbildung ist unter dem Aspekt zu sehen, dass eine Unterseite des Substrats beim Fördern, unabhängig von der Dicke des Substrats, unveränderlich ist und sich mit der Dicke des jeweils verwendeten Substrats nur die Position der oberen Fläche des Substrats hinsichtlich der Vertikalen ändert.

Es wird als besonders vorteilhaft angesehen, wenn die Drehrichtung der Auftragswalze entgegen einer Verfahrrichtung, insbesondere einer geradlinigen Verfahrrichtung des Substrats erfolgt. Diese Verfahrrichtung des Substrats ist insbesondere horizontal. Demzufolge wird der Klebstoff im Gegenlauf auf das sich bewegende Substrat, insbesondere auf eine Kante des sich bewegenden Substrats übertragen. Durch den Gegenlauf der Auftragswalze gegen die Transportrichtung des Substrats wird der Klebestoff fast vollständig von der Auftragswalze abgetragen. Demnach ist die Klebstoffmenge, die noch von der Abstreifrakel abzustreifen ist, recht gering. Es ist somit nur eine recht geringe Menge Klebstoff zu entsorgen.

Die Verwendung einer Schlitzdüse hat den besonderen Vorteil, dass der Klebstoff, konkret ein Klebstofffilm, der auf die Auftragswalze übertragen wird, genauso breit und so lang gebildet werden kann, dass er beim Übertragen auf das Substrat dieses von der Vorderkante bis zur Hinterkante mit Klebstoff bedeckt und dass kein Klebstoff über die Vorder- oder Hinterkante hinaus aufgetragen wird. Die Klebstoffmenge, die von der Schlitzdüse auf die Auftragswalze gefördert wird, ist durch die volumetrische Förderung von heutigen Klebstoffauftragsgeräten exakt dosierbar.

Mit der Vorrichtung kann ein Klebstoffauftrag auf dem Substrat erzeugt werden, der am Substrat nicht durchgehend sein muss. Es können beliebige Auftragsmuster mit Klebstoffunterbrechungen realisiert werden.

Bezüglich der Anordnung von Schlitzdüse und Abstreifrakel wird es als besonders vorteilhaft angesehen, wenn die Schlitzdüse und die Abstreifrakel eine Kreiswinkel von 160° bis 200°, insbesondere 180° miteinander einschließen. Der Kreiswinkel zwischen Auftrag von Klebstoff auf die Auftragswalze und Abstreifen des überschüssigen Klebstoffs von der Auftragswalze entspricht somit ungefähr einem Halbkreis.

Es wird als besonders vorteilhaft angesehen, wenn die Schlitzdüse und eine Vertikale bezüglich einer mit Klebstoff zu versehenen Oberfläche des Substrats einen Kreiswinkel von 80° bis 100°, insbesondere 90° einschließen und/oder die Abstreifrakel und diese Vertikale bezüglich der mit Klebstoff zu versehenen Oberfläche des Substrats einen Kreiswinkel von 60° bis 120°, insbesondere 90° einschließt.

Insbesondere ist der Schlitz der Schlitzdüse parallel zur Drehachse der Auftragswalze angeordnet und/oder die Abstreifrakel parallel zur Drehachse der Auftragswalze angeordnet.

Die Auftragswalze besteht vorzugsweise aus einem härtbaren Material und ist zumindest im Bereich des Walzenumfangs gehärtet. Alternativ kann auch eine Oberflächenbeschichtung als Verschleißschutz eingesetzt werden.

Vorzugsweise sind die Auftragswalze, die Einrichtung zum Ausgeben von Klebstoff und die Abstreifrakel in einem ersten Support gelagert, und es ist dieser erste Support in einem zweiten Support horizontal geführt sowie horizontal in Kontaktrichtung der Auftragswalze am Substrat federgelagert. Hierbei wird die Auftragswalze während der Übertragung des Klebstoffs leicht gegen das Substrat, insbesondere leicht gegen die zu leimende Kante des Substrats gedrückt, sodass sie sicheren Kontakt zu diesem hat.

Als besonders vorteilhaft wird es angesehen, wenn die Auftragswalze und/oder die Einrichtung zum Auftragen von Klebstoff und/oder die Abstreifrakel und/oder die Heizeinrichtung fliegend gelagert ist bzw. sind. Insbesondere erfolgt die fliegende Lagerung auf der jeweiligen selben Seite der Vorrichtung.

Gelöst wird die Aufgabe ferner durch ein Verfahren gemäß dem Patentanspruch 13. Bei diesem Verfahren zum Auftragen von Klebstoff auf ein Substrat ist vorgesehen, dass der Klebstoff auf eine rotierende Auftragswalze aufgebracht wird, Klebstoff von der Auftragswalze auf das geradlinig entlang der Auftragswalze geförderte Substrat übertragen wird, nicht auf das Substrat übertragener, überschüssiger Klebstoff von der Auftragswalze abgestreift und dieser überschüssige Klebstoff entsorgt wird. Eine besonders gute Übertragungsrate des Klebstoffs von der Auftragswalze auf das Substrat ist zu verzeichnen, wenn der Klebstoff mittels der Auftragswalze entgegen der Transportrichtung des Substrats aufgetragen wird. Von besonderem Vorteil ist es, wenn die Umfangsgeschwindigkeit der Auftragswalze das Ein- bis Zweifache der Substratgeschwindigkeit beträgt.

Besonders vorteilhaft ist es bei dem Verfahren, wenn der Klebstoffaustritt aus der Einrichtung zum Ausgeben des Klebstoffs derart getaktet ist, dass die Breite des Klebstoffauftrags auf die Auftragswalze der Dicke des Substrats entspricht und/oder der Auftrag des Klebstoffauftrags auf das Substrat mit einer Vorderkante des Substrats beginnt und mit einer Hinterkante des Substrats endet.

Weitere Merkmale der Erfindung sind in den Unteransprüchen, der Beschreibung der Figuren und den Figuren selbst dargestellt, wobei bemerkt wird, dass alle Einzelmerkmale und alle Kombinationen von Einzelmerkmalen erfindungswesentlich sind.

### Figurenbeschreibung

In den Figuren ist die Erfindung anhand eines bevorzugten Ausführungsbeispiels in schematischer Darstellung veranschaulicht, ohne auf dieses Ausführungsbeispiel beschränkt zu sein. Es zeigt:
- Fig. 1: eine Draufsicht einer erfindungsgemäßen Vorrichtung mit einem Transportsystem und mittels diesem geförderter Substrate,
- Fig. 2: einen vergrößerten Ausschnitt des Bereichs der zur Vorrichtung gemäß Fig. 1 dargestellten Auftragswalze,
- Fig. 3: eine Seitenansicht der Vorrichtung gemäß Fig. 1, von der Seite des Substrats betrachtet,
- Fig. 4: einen vergrößerten Ausschnitt A aus Fig. 3 eines hinteren Randbereichs der Auftragswalze mit der Abstreifrakel.

Mittels der Vorrichtung 20, die auch als Klebstoffapplikator bezeichnet ist, wird Klebstoff 8 mittels einer Schlitzdüse 1 auf eine als Hohlzylinder ausgebildete, sich drehende, beheizbare Auftragswalze 5 aufgebracht, die den Klebstoff 8 im Gegenlauf auf eine Fläche 25 eines sich bewegenden, quaderförmigen Substrats 6 überträgt und wobei Klebstoff, der nach der Übertragung von Klebstoff auf das Substrat 6 noch auf der Auftragswalze 5 haftet, mittels einer Abstreifrakel 11 abgestreift wird, und dieser abgestreifte Klebstoff 15 nicht mehr in die Vorrichtung zurückgeführt wird.

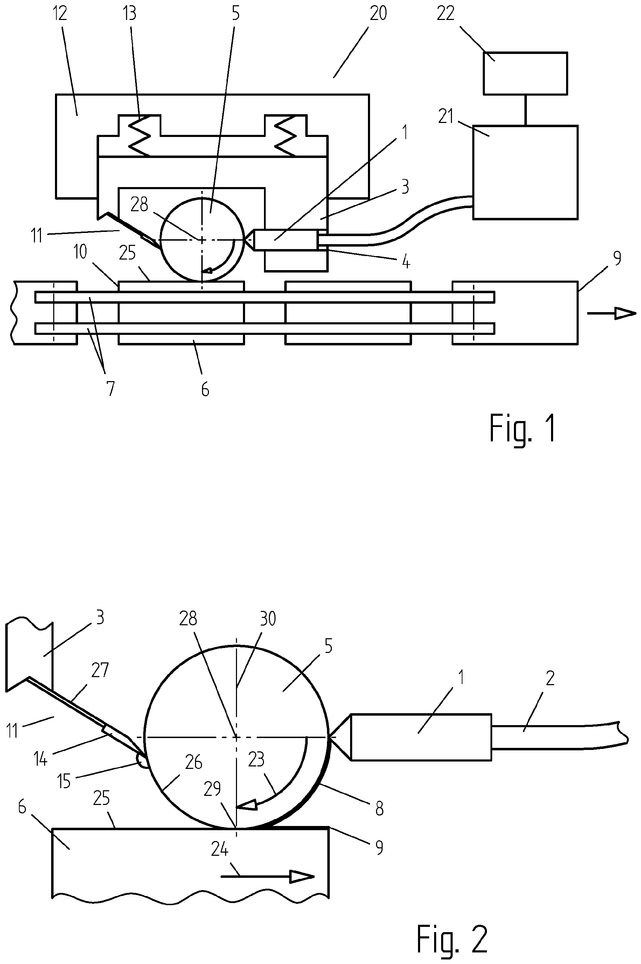

In Fig. 1 ist die Vorrichtung 20 und ein Transportsystem 7 zum Fördern des Substrats 6 dargestellt. Die Schlitzdüse 1 wird von einem Klebstoffauftragsgerät 21 über einen Schlauch 2 mit Klebstoff versorgt. Die Schlitzdüse 1 ist über eine Längsführung 4 in einem ersten Support 3 gehalten. Mit der Längsführung 4 wird die Möglichkeit geschaffen, die Schlitzdüse 1 in Längsrichtung, quer zu der Achsrichtung der beheizbaren Auftragswalze 5 zu verschieben. Dadurch kann der Abstand des Düsenschlitzes zur Auftragswalze 5 verändert werden. Ferner ist es bei großem Abstand möglich, eine Abdeckung über den Düsenschlitz anzubringen mit der, insbesondere für PUR-Klebstoff, das Verstopfen des Düsenschlitzes durch vernetzten PUR-Klebstoff verhindert werden kann. Dies wird dann benötigt, wenn eine Kantenanleimmaschine, in deren Zusammenhang die Vorrichtung 20 Verwendung findet, längere Zeit nicht betrieben wird und kein Klebstoff verarbeitet wird. Die Längsführung 4 zur Halterung der Schlitzdüse 1 ist so gestaltet, dass die Schlitzdüse 1 für Reinigungs- und Servicezwecke einfach ausgebaut werden kann. Die Auftragswalze 5 ist in etwa parallel, insbesondere parallel zum Düsenschlitz der Schlitzdüse 1 angeordnet. Sie ist von einem geregelten Motor antreibbar und transportiert den Klebstoff 8, konkret einen Klebstofffilm 8, der von der Schlitzdüse 1 appliziert wird, gegen ein Substrat 6.

Die Beheizung der Auftragswalze 5 erfolgt durch ein fest eingebautes, stationär stehendes Heizteil, das sich im Inneren der Auftragswalze 5 befindet. Das Heizteil wird über Heizpatronen beheizt. Zur Übertragung der Wärme vom Heizteil auf die rotierende Auftragswalze 5 wird ein flüssiges Wärmeträgermedium eingesetzt. Die Auftragswalze 5 ist fliegend gelagert und das Heizteil ist ebenfalls fliegend gelagert und auf der Lagerungsseite abgestützt.

Der Motor zum Antreiben der Auftragswalze 5 und die Heizpatronen der Auftragswalze 5 sind mit einer Steuerung 22 des Klebstoffauftragsgeräts 21 verbunden.

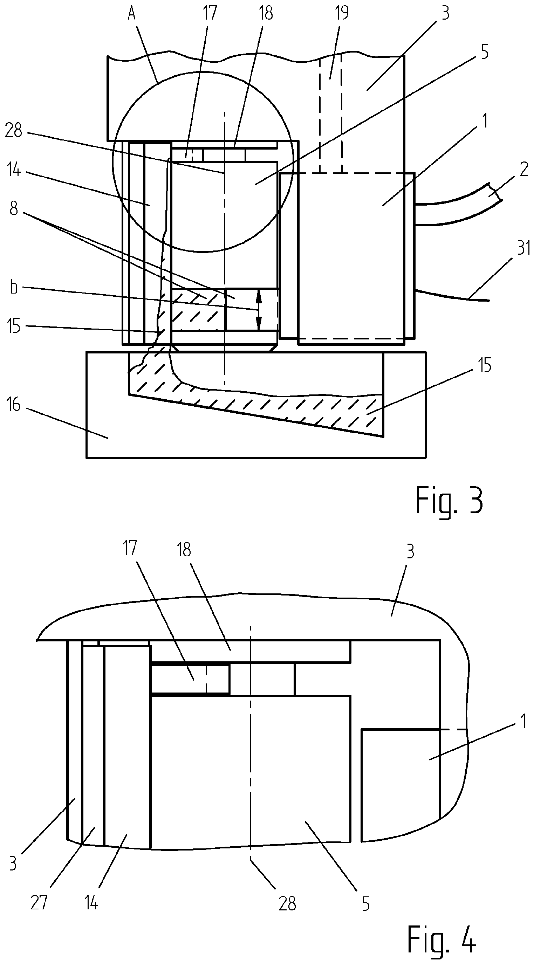

Das Transportsystem 7 wird von einer Kantenleimmaschine angetrieben. Dieses Transportsystem 7 weist beispielsweise obere und untere Riemenbänder und Rollen auf, zwischen denen das Substrat gehalten und transportiert wird. Hierbei wird das Substrat 6 von dem Transportsystem 7 an der Auftragswalze 5 vorbei transportiert. Das Substrat wird zwischen den Riemenbändern und Rollen derart geklemmt, dass es sich seitlich nicht verschiebt, selbst dann wenn leichte Querkräfte auf das Substrat wirken. Wird das Substrat 6 an der Auftragswalze vorbei transportiert, berührt die Auftragswalze 5 das Substrat 6. Die Auftragswalze 5 dreht sich, wie durch den Pfeil 23 veranschaulicht, gegen die Laufrichtung des Substrats 6, veranschaulicht durch den Pfeil 24, sodass der Klebstofffilm 8 von der Auftragswalze 5 abgestreift und auf die schmale Kante, somit schmale seitliche Fläche 25 des Substrats 6, die der Umfangsfläche 26 der Auftragswalze 5 zugewandt und parallel zur Drehachse der Auftragswalze 5 angeordnet ist, übertragen wird. Der Klebstofffilm 8 wird von der Schlitzdüse 1 mit einer Breite b (siehe Fig. 3), die exakt, oder geringfügig schmaler, der Dicke des Substrats 6 entspricht, auf die Auftragswalze 5 aufgetragen. Beim Abstreifen des Klebstoffs durch das Substrat 6 wird dadurch nahezu einhundert Prozent des Klebstoffs, der auf der Auftragswalze 5 transportiert wird, abgetragen. Der Klebstoffaustritt aus der Schlitzdüse 1 wird durch die Steuerung 22 des Klebstoffauftragsgeräts 21 derart getaktet, dass der Anfang des Klebstofffilms exakt mit der Vorderkante 9 des Substrats 6 beginnt und das Ende exakt mit der Hinterkante 10 des Substrats 6 endet. Die Umfangsgeschwindigkeit der Auftragswalze 5 ist verstellbar. Bevorzugt wird eine Umfangsgeschwindigkeit, die in etwa der ein- bis zweifachen Substratgeschwindigkeit entspricht. Dies gewährleistet, Klebstoff sehr sauber von der Auftragswalze 5 auf das Substrat 6 zu übertragen. Wird die Umfangsgeschwindigkeit der Auftragswalze 5 verändert, hat dieses einen Einfluss auf die Taktung des Klebstofffilms 8 an der Schlitzdüse. Die Steuerung 22 des Klebstoffauftragsgeräts 21 passt die Taktung automatisch an die neuen Bedingungen an. Mit dieser Art des Klebstoffauftrags von der Schlitzdüse 1 über die Auftragswalze 5 auf das Substrat 6 lässt sich auch ein Klebstoffauftrag realisieren, der am Substrat 6 nicht durchgehend ist. Es können beliebige Auftragsmuster mit Klebstoffunterbrüchen realisiert werden.

Ein weiterer Vorteil liegt darin, dass der Klebstoff nur kurzzeitig mit der Umgebungsluft in Berührung kommt. Dies reduziert die Verschmutzung des Klebstoffs durch Staub aus der Umgebung und es entstehen weniger Dämpfe, die an die Umgebungsluft abgegeben werden. Die Schlitzdüse 1 wird deshalb so angeordnet, dass die Auftragswalze 5 den Klebstoff nur über einen kurzen Umfangteil transportieren muss. Im Ausführungsbeispiel ist dies ca. ein Viertel des Umfangs der Auftragswalze 5.

Damit die Auftragswalze 5, während dem sie Klebstoff auf die schmale Kante 25 des Substrats 6 überträgt, das Substrat 6 auch sicher berührt, wird sie über eine federnde Aufhängung gegen das Substrat 6 gedrückt. Die Auftragswalze 5 ist im ersten Support 3 gelagert. Die Abstreifrakel 11 ist ebenfalls mit dem ersten Support 3 verbunden. Der erste Support 3 ist über eine Linearführung in einem zweiten Support 12, der mit dem Maschinengestell fest verbunden ist, gelagert. Durch die Längsführung ist der erste Support 3 und damit die Auftragswalze 5 gegen die schmale Kante 25 des Substrats 6 verschiebbar. Mittels Federn 13 wird ein definierter Druck von der Auftragswalze 5 gegen das Substrat 6 ausgeübt. Zusätzlich können dadurch kleine Positionsabweichungen des Substrats 6 im Transportsystem 7 aufgenommen werden. Anstelle der Linearführungen könnte der erste Support 3 auch schwenkbar aufgehängt sein.

Die Auftragswalze 5 besteht vorzugsweise aus einem härtbaren Material und ist zumindest im Bereich des Walzenumfangs gehärtet. Alternativ kann auch eine Oberflächenbeschichtung eingesetzt werden. Dadurch kann der Verschleiß an der Außenfläche der Auftragswalze 5, die mit dem Substrat 6 in Kontakt kommt, reduziert werden.

Die Abstreifrakel 11 weist ein Abstreifmesser 14 (Fig. 2) auf, das über ein Federblech 27 mit dem ersten Support 3 verbunden ist. Das Abstreifmesser 14 ist mit leichtem Druck gegen die Umfangsfläche 26 der Auftragswalze 5 angestellt. Mit dem Abstreifmesser 14 wird Restklebstoff, welcher, nachdem die Auftragswalze 5 den Klebstofffilm auf das Substrat 6 übertragen hat, noch auf der Auftragswalze 5 haftet, abgestreift. Der abgestreifte Klebstoff 15 baut sich im vorderen Bereich des Abstreifmessers 14 auf und fließt, wenn genügend Klebstoff aufgebaut ist, in Richtung der Drehachse 28 der Auftragswalze 5, somit in vertikaler Richtung nach unten. Um das Fließen des Klebstoffs zu begünstigen, wird der erste Support 3 beheizt. Er leitet die Wärme über das Federblech 27 in das Abstreifmesser 14. Auch von der beheizten Auftragswalze 5 gelangt Wärme zum abgestreiften Klebstoff 15, sodass dieser, der Schwerkraft folgend, zu fließen beginnt, wenn genügend abgestreifter Klebstoff sich angesammelt hat.

Der Ausgabebereich der Schlitzdüse 1 und eine Vertikale 30 bezüglich der mit Klebstoff 8 zu versehenden Oberfläche 25 des Substrats 6 schließen einen Winkel von 90° ein und es schließt der Abstreifbereich der Abstreifrakel 11 mit dieser Vertikalen 30 gleichfalls einen Winkel von 90° ein.

In der Fig. 3 ist dargestellt, dass der abgestreifte Klebstoff 15 vertikal nach unten läuft und mit einer Auffangwanne 16 aufgefangen wird. Die Auffangwanne 16 wird periodisch von Hand entleert und der Klebstoff entsorgt, insbesondere als Restmüll/Haushaltmüll. Werden sehr dicke Substrate 6 verarbeitet, so wird fast die ganze Walzenlänge der Auftragswalze 5 mit Klebstoff versehen. In diesem Fall kann es passieren, dass der abgestreifte Klebstoff 15 auf dem Abstreifmesser 14 nicht nur nach unten abläuft, sondern auch etwas nach oben ausweicht. Es ist deshalb am oberen Ende der Auftragswalze 5 ein Klebstoffabweiser 17 (siehe Fig. 4) angebracht. Der Klebstoffabweiser 17 ist zwischen dem Ende der Auftragswalze 5 und einem Flansch 18 des ersten Supports 3 angebracht. Er streift Klebstoff, der allenfalls hinter den Rand der Auftragswalze 5 gelangt, ab und führt ihn zurück zum Abstreifmesser 14. Der Flansch 18 hat einen Außendurchmesser, der dem Durchmesser der Auftragswalze 5 entspricht. Das Abstreifmesser 14 ragt über den oberen Rand der Auftragswalze 5 hinaus. Es überdeckt dabei den Abstreifer und den Flansch 18 des ersten Supports 3. Das Abstreifmesser 14 endet mit einem minimalen Spalt an der Begrenzungsfläche des ersten Supports 3. Klebstoff, der in diesem Bereich hängen bleibt, muss gelegentlich von Hand entfernt werden.

In der Fig. 3 ist die Breite b des Klebstofffilms 8 dargestellt. Durch die Stange 19 kann die Länge des Düsenschlitzes verstellt werden. Ist das Substrat 6 dicker, so wird die Länge des Düsenschlitzes nach oben vergrößert. Die untere Begrenzung des Substrats 6 bleibt immer an der gleichen Stelle. Die Substratdicke verändert sich nur nach oben. Diese Verstellung der Länge des Düsenschlitzes kann von Hand oder durch einen Stellmotor erfolgen. Erfolgt die Verstellung durch einen Stellmotor, so ist dieser mit der Steuerung 22 des Klebstoffauftragsgeräts 21 verbunden und wird von ihr angesteuert. Die Schlitzdüse 1 ist über einen Kabelstrang 31 mit der Steuerung 22 des Klebstoffauftragsgeräts 21 verbunden. Die Leistung zur Beheizung der Schlitzdüse 1, die Ansteuerung der Ventile für die Taktung des Klebstoffausstoßes und die notwendigen Messsignale werden durch den Kabelstrang 31 ausgetauscht. Alle Heizungen der Vorrichtung 20 sind ebenfalls mit dem Klebstoffauftragsgerät 21 verbunden und werden durch die Steuerung des Klebstoffauftragsgeräts 21 gesteuert.

### Bezugszeichenliste

- 1: Schlitzdüse
- 2: Schlauch
- 3: Erster Support
- 4: Längsführung
- 5: Auftragswalze
- 6: Substrat
- 7: Transportsystem
- 8: Klebstofffilm
- 9: Vorderkante
- 10: Hinterkante
- 11: Abstreifrakel
- 12: Zweiter Support
- 13: Feder
- 14: Abstreifmesser
- 15: Abgestreifter Klebstoff
- 16: Auffangwanne
- 17: Klebstoffabweiser
- 18: Flansch
- 19: Stange
- 20: Vorrichtung
- 21: Klebstoffauftragsgerät
- 22: Steuerung des Klebstoffauftragsgeräts
- 23: Pfeil
- 24: Pfeil
- 25: Fläche
- 26: Umfangsfläche
- 27: Federblech
- 28: Drehachse
- 29: Abgabebereich
- 30: Vertikale
- 31: Kabelstrang

## Patentansprüche

1. Vorrichtung (20) zum Auftragen von Klebstoff (8) auf ein Substrat (6), mit einer um eine Achse (28) drehbaren Auftragswalze (5), einer Einrichtung (1) zum Ausgeben von Klebstoff (8) auf eine Umfangsfläche (26) der Auftragswalze (5), einem Abgabebereich (29) der Auftragswalze (5) zum Abgeben von Klebstoff (8) von der Auftragswalze (5), sowie mit einer Abstreifrakel (11), wobei der Abgabebereich (29) für Klebstoff (8) in Drehrichtung (23) der Auftragswalze (5) nach der Einrichtung (1) zum Ausgeben des Klebstoffs (8) auf die Auftragswalze (5) und vor der Abstreifrakel (11) angeordnet ist, wobei die Auftragswalze (5) um eine vertikale Achse (28) drehbar ist und der von der Abstreifrakel (11) abgestriffene überschüssige Klebstoff (15) von der Abstreifrakel (11) in eine unterhalb der Abstreifrakel (11) angeordnete Auffangeinrichtung (16) gelangt, **dadurch gekennzeichnet, dass** die Einrichtung (1) zum Ausgeben von Klebstoff (8) als Schlitzdüse ausgebildet ist, wobei die Schlitzdüse (1) einen vertikalen Schlitz aufweist, dessen vertikale Schlitzerstreckung einstellbar ist.

2. Vorrichtung (20) nach Anspruch 1, **dadurch gekennzeichnet, dass** die Auftragswalze (5) antreibbar ist, insbesondere als antreibbarer Zylinder ausgebildet ist.

3. Vorrichtung (20) nach Anspruch 1 oder 2, **dadurch gekennzeichnet, dass** die vertikale Schlitzerstreckung am unteren Ende des Schlitzes unveränderbar und im oberen Bereich einstellbar ist.

4. Vorrichtung (20) nach einem der Ansprüche 1 bis 3, **dadurch gekennzeichnet, dass** die Schlitzdüse (1) derart gelagert ist, dass der Abstand zur Auftragswalze (5) veränderbar ist.

5. Vorrichtung (20) nach einem der Ansprüche 1 bis 4, **dadurch gekennzeichnet, dass** die Drehrichtung (23) der Auftragswalze (5) entgegen einer Verfahrrichtung (24), insbesondere einer geradlinigen, vorzugsweise horizontalen Verfahrrichtung (24) des Substrats (6) erfolgt.

6. Vorrichtung (20) nach einem der Ansprüche 1 bis 5, **dadurch gekennzeichnet, dass** die Schlitzdüse (1) und der Abstreifrakel (11) diametral angeordnet sind.

7. Vorrichtung (20) nach einem der Ansprüche 1 bis 6, **dadurch gekennzeichnet, dass** die Schlitzdüse (1) und die Abstreifrakel (11) einen Kreiswinkel von 160° bis 200°, insbesondere 180° miteinander einschließen.

8. Vorrichtung (20) nach einem der Ansprüche 1 bis 7, **dadurch gekennzeichnet, dass** der Ausgabebereich der Schlitzdüse (1) und eine Vertikale (30) bezüglich einer mit Klebstoff (8) zu versehenden Oberfläche (25) des Substrats (6) einen Kreiswinkel von 80° bis 100°, insbesondere 90° einschließt und/oder der Abstreifbereich der Abstreifrakel (11) und diese Vertikale (30) bezüglich der mit Klebstoff (8) zu versehenden Oberfläche (25) des Substrats (6) einen Kreiswinkel von 60° bis 120°, insbesondere 90° einschließt.

9. Vorrichtung (20) nach einem der Ansprüche 1 bis 8, **dadurch gekennzeichnet, dass** die Auftragswalze (5), die Einrichtung (1) zum Ausgeben von Klebstoff (8) und die Abstreifrakel (11) in einem ersten Support (3) gelagert sind, und dieser erste Support (3) in einen zweiten Support (12) horizontal geführt sowie horizontal in Kontaktrichtung der Auftragswalze (5) am Substrat (6) federgelagert ist.

10. Vorrichtung (20) nach einem der Ansprüche 1 bis 9, **dadurch gekennzeichnet, dass** die Auftragswalze (5) mittels einer Heizeinrichtung beheizbar ist.

11. Vorrichtung (20) nach einem der Ansprüche 1 bis 10, **dadurch gekennzeichnet, dass** die Auftragswalze (5) und/oder die Einrichtung (1) zum Auftragen von Klebstoff (8) und/oder die Abstreifrakel (11) und/oder die Heizeinrichtung fliegend gelagert ist/sind, insbesondere auf derselben Seite fliegend gelagert sind.

12. Verfahren zum Auftragen von Klebstoff (8) auf ein Substrat (6), mittels einer Vorrichtung (20), die die Merkmale eines der Patentansprüche 1 bis 11 aufweist, mit folgenden Merkmalen:
- Aufbringen von Klebstoff (8) auf eine rotierende Auftragswalze (5),
- Übertragen von Klebstoff (8) von der Auftragswalze (5) auf das geradlinig entlang der Auftragswalze (5) geförderte Substrat (6),
- Abstreifen von nicht auf das Substrat (6) aufgetragenem, überschüssigem Klebstoff (15) von der Auftragswalze (5) und Entsorgen dieses überschüssigen Klebstoffs (15).

13. Verfahren nach Anspruch 12, wobei der Klebstoff (8) mittels der Auftragswalze (5) entgegen der Transportrichtung (24) des Substrats (6) aufgetragen wird, insbesondere die Umfangsgeschwindigkeit der Auftragswalze (5) das Ein- bis Zweifache der Substratgeschwindigkeit beträgt.

14. Verfahren nach Anspruch 12 oder 13, wobei der Klebstoffaustritt aus der Einrichtung (1) zum Ausgeben von Klebstoff (8) derart getaktet ist, dass der Anfang des Klebstoffauftrags auf das Substrat (6) mit einer Vorderkante (9) des Substrats (6) beginnt und mit einer Hinterkante (10) des Substrats (6) endet und/oder die Breite des Klebstoffauftrags auf die Auftragswalze (5) der Dicke des Substrats (6) entspricht.

## Claims

1. Device (20) for applying adhesive (8) to a substrate (6), having an application roller (5) that is rotatable about an axis (28), an installation (1) for dispensing adhesive (8) to a circumferential area (26) of the application roller (5), a dispensing region (29) of the application roller (5) for dispensing adhesive (8) from the application roller (5), and having a doctor blade (11), wherein the dispensing region (29) for adhesive (8) in the rotation direction (23) of the application roller (5) is located behind the installation (1) for dispensing the adhesive (8) to the application roller (5) and ahead of the doctor blade (11), wherein the application roller (5) is rotatable about a vertical axis (28) and the excess adhesive (15) wiped by the doctor blade (11) from the doctor blade (11) reaches a collection installation (16) that is located below the doctor blade (11), **characterized in that** the installation (1) for dispensing adhesive (8) is configured as a slot die, wherein the slot die (1) has a vertical slot, the vertical slot extent of the latter being adjustable.

2. Device (20) according to Claim 1, **characterized in that** the application roller (5) is drivable, in particular is configured as drivable cylinder.

3. Device (20) according to Claim 1 or 2, **characterized in that** the vertical slot extent at the lower end of the slot is non-modifiable and in the upper region is modifiable.

4. Device (20) according to one of Claims 1 to 3, **characterized in that** the slot die (1) is mounted in such a manner that the spacing from the application roller (5) is modifiable.

5. Device (20) according to one of Claims 1 to 4, **characterized in that** the rotation direction (23) of the application roller (5) is counter to a displacement direction (24), in particular to a rectilinear and preferably horizontal displacement direction (24) of the substrate (6).

6. Device (20) according to one of Claims 1 to 5, **characterized in that** the slot die (1) and the doctor blade (11) are diametrically located.

7. Device (20) according to one of Claims 1 to 6, **characterized in that** the slot die (1) and the doctor blade (11) mutually enclose a circular angle of 160° to 200°, in particular 180°.

8. Device (20) according to one of Claims 1 to 7, **characterized in that** the dispensing region of the slot die (1) and a vertical (30) in relation to a surface (25) of the substrate (6) that is to be provided with adhesive (8) enclose a circular angle of 80° to 100°, in particular 90°, and/or the wiping region of the doctor blade (11) and this vertical (30) in relation to the surface (25) of the substrate (6) that is to be provided with adhesive (8) enclose a circular angle of 60° to 120°, in particular 90°.

9. Device (20) according to one of Claims 1 to 8, **characterized in that** the application roller (5), the installation (1) for dispensing adhesive (8), and the doctor blade (11) are mounted in a first support (3), this first support (3) being horizontally guided in a second support (12) and being spring-mounted horizontally in the direction of contact of the application roller (5) with the substrate (6).

10. Device (20) according to one of Claims 1 to 9, **characterized in that** the application roller (5) is heatable by means of a heating installation.

11. Device (20) according to one of Claims 1 to 10 **characterized in that** the application roller (5), and/or the installation (1) for applying adhesive (8), and/or the doctor blade (11), and/or the heating installation are/is mounted in an overhung position, in particular mounted in an overhung position on the same side.

12. Method for applying adhesive (8) to a substrate (6) by means of a device (20) having the features of one of Patent Claims 1 to 11, said method comprising the following features:
- applying adhesive (8) to a rotating application roller (5);
- transferring adhesive (8) from the application roller (5) to the substrate (6) that is conveyed in a rectilinear manner along the application roller (5);
- wiping excess adhesive (15) that has not been applied to the substrate (6) from the application roller (5), and disposing of this excess adhesive (15).

13. Method according to Claim 12, wherein the adhesive (8) is applied by means of the application roller (5) counter to the transportation direction (24) of the substrate (6), the circumferential speed of the application roller (5) in particular being one to two times the substrate speed.

14. Method according to Claim 12 or 13, wherein the exit of adhesive from the installation (1) for dispensing adhesive (8) is cycled in such a manner that the beginning of the adhesive application to the substrate (6) commences with a leading edge (9) of the substrate (6) and ends with a trailing edge (10) of the substrate (6), and/or the width of the adhesive application to the application roller (5) corresponds to the thickness of the substrate (6).

## Revendications

1. Dispositif (20) pour l'application d'adhésif (8) sur un substrat (6), comprenant un rouleau d'enduction (5) pouvant tourner autour d'un axe (28), un dispositif (1) pour délivrer de l'adhésif (8) sur une surface périphérique (26) du rouleau d'enduction (5), une région de distribution (29) du rouleau d'enduction (5) pour distribuer de l'adhésif (8) depuis le rouleau d'enduction (5), ainsi qu'une racle de raclage (11), la région de distribution (29) pour l'adhésif (8) étant disposée, dans le sens de rotation (23) du rouleau d'enduction (5), après le dispositif (1) pour délivrer de l'adhésif (8) sur le rouleau d'enduction (5) et avant la racle de raclage (11), le rouleau d'enduction (5) pouvant tourner autour d'un axe vertical (28) et l'adhésif (15) en excès raclé par la racle de raclage (11) parvenant depuis la racle de raclage (11) dans un dispositif de collecte (16) disposé en dessous de la racle de raclage (11), **caractérisé en ce que** le dispositif (1) pour délivrer de l'adhésif (8) est réalisé sous forme de buse à fente, la buse à fente (1) présentant une fente verticale dont l'étendue verticale de fente peut être ajustée.

2. Dispositif (20) selon la revendication 1, **caractérisé en ce que** le rouleau d'enduction (5) peut être entraîné, notamment est réalisé sous forme de cylindre pouvant être entraîné.

3. Dispositif (20) selon la revendication 1 ou 2, **caractérisé en ce que** l'étendue verticale de la fente à l'extrémité inférieure de la fente n'est pas variable et peut être ajustée dans la région supérieure.

4. Dispositif (20) selon l'une quelconque des revendications 1 à 3, **caractérisé en ce que** la buse à fente (1) est supportée de telle sorte que la distance au rouleau d'enduction (5) peut être variée.

5. Dispositif (20) selon l'une quelconque des revendications 1 à 4, **caractérisé en ce que** le sens de rotation (23) du rouleau d'enduction (5) est opposé à une direction de déplacement (24), en particulier une direction de déplacement (24) rectiligne, de préférence horizontale, du substrat (6) .

6. Dispositif (20) selon l'une quelconque des revendications 1 à 5, **caractérisé en ce que** la buse à fente (1) et la racle de raclage (11) sont disposées diamétralement.

7. Dispositif (20) selon l'une quelconque des revendications 1 à 6, **caractérisé en ce que** la buse à fente (1) et la raclette de raclage (11) forment un angle circulaire de 160° à 200°, en particulier de 180° l'une avec l'autre.

8. Dispositif (20) selon l'une quelconque des revendications 1 à 7, **caractérisé en ce que** la région de sortie de la buse à fente (1) et une verticale (30) par rapport à une surface (25) du substrat (6) devant être munie d'adhésif (8) forment un angle circulaire de 80° à 100°, en particulier de 90° et/ou la région de raclage de la racle de raclage (11) et cette verticale (30) par rapport à la surface (25) du substrat (6) devant être munie d'adhésif (8) forment un angle circulaire de 60° à 120°, en particulier de 90°.

9. Dispositif (20) selon l'une quelconque des revendications 1 à 8, **caractérisé en ce que** le rouleau d'enduction (5), le dispositif (1) pour délivrer de l'adhésif (8) et la racle de raclage (11) sont supportés dans un premier support (3), et ce premier support (3) est guidé horizontalement dans un deuxième support (12) et est supporté horizontalement sur ressort dans la direction de contact du rouleau d'enduction (5) sur le substrat (6).

10. Dispositif (20) selon l'une quelconque des revendications 1 à 9, **caractérisé en ce que** le rouleau d'enduction (5) peut être chauffé au moyen d'un dispositif de chauffage.

11. Dispositif (20) selon l'une quelconque des revendications 1 à 10, **caractérisé en ce que** le rouleau d'enduction (5) et/ou le dispositif (1) pour délivrer de l'adhésif (8) et/ou la racle de raclage (11) et/ou le dispositif de chauffage est/sont supportés en porte-à-faux, en particulier sont supportés en porte-à-faux du même côté.

12. Procédé pour appliquer de l'adhésif (8) sur un substrat (6), au moyen d'un dispositif (20) qui présente les caractéristiques de l'une des revendications 1 à 11, comprenant les caractéristiques suivantes :
- application d'adhésif (8) sur un rouleau d'enduction en rotation (5),
- transfert d'adhésif (8) du rouleau d'enduction (5) aux substrats (6) transportés en ligne droite le long du rouleau d'enduction (5),
- raclage d'adhésif (15) en excès, non appliqué sur le substrat (6), pour l'enlever du rouleau d'enduction (5), et mise au rebut de cet adhésif en excès (15).

13. Procédé selon la revendication 12, dans lequel l'adhésif (8) est appliqué au moyen du rouleau d'enduction (5) dans le sens opposé à la direction de transport (24) du substrat (6), en particulier la vitesse périphérique du rouleau d'enduction (5) est une à deux fois plus grande que la vitesse du substrat.

14. Procédé selon la revendication 12 ou 13, dans lequel la sortie d'adhésif du dispositif (1) pour délivrer de l'adhésif (8) est cadencée de telle sorte que le début de l'application d'adhésif sur le substrat (6) commence avec une arête avant (9) du substrat (6) et se termine avec une arête arrière (10) du substrat (6) et/ou la largeur de l'application d'adhésif sur le rouleau d'enduction (5) correspond à l'épaisseur du substrat (6).
